# EUROPEAN PATENT SPECIFICATION

(11) **EP 1 862 074 B1**
(45) Date of publication and mention of the grant of the patent: **26.05.2010**
(21) Application number: 07010586.1
(22) Date of filing: 29.05.2007
(51) Int. Cl.: A23B 4/06, A23B 4/08, A23B 4/16, A22B 3/06, A22B 3/08, A22C 25/00

(54) **Method of producing fish meat having fresh color**
Verfahren zur Herstellung von Fischfleisch mit einer frischen Farbe
Procédé pour la production de chair de poisson à couleur de chair fraîche

(30) Priority: 30.05.2006 CN 200610078500
(43) Date of publication of application: 05.12.2007
(73) Proprietor: Lee, Po-Hsing, Ta-Tung Taipei City (TW)
(72) Inventor: Lee, Po-Hsing, Ta-Tung Taipei City (TW)
(74) Representative: Daniels, Jeffrey Nicholas

(56) References cited:
- EP-A- 1 731 430
- EP-B1- 1 143 802
- WO-A-00/38530
- WO-A-01/84941
- GB-A- 2 384 969
- JP-A- 2002 034 444
- US-A1- 2005 048 188
- DATABASE WPI Week 200715 Derwent Publications Ltd., London, GB; AN 2007-146743 XP002447318 & KR 2005 111 822 A (DAE SUNG TRADING CO LTD) 29 November 2005 (2005-11-29)
- DATABASE WPI Week 200380 Derwent Publications Ltd., London, GB; AN 2003-861420 XP002447319 & KR 200 204 700 A (TSENG W) 16 January 2002 (2002-01-16)

## Description

The invention relates to a method of preserving fish, more particularly to a method of producing fish meat having fresh color.

EP-A-1731430 discloses a method of preserving a fish meat product.

EP-B1-1143802 discloses a process for slaughtering fish.

JP2002 034444A discloses a method for producing fresh fish pieces.

US2005/048188A1 discloses a method for processing fish of red flesh.

In general, fish meat tissues are vulnerable to bacterial decomposition. The meat of freshly caught fish is likely to decay under room temperature, and fats of fish are prone to oxidization and acidification, so that the color of fish is adversely affected. To preserve the fresh color of fish, fish have to be processed quickly after they are caught.

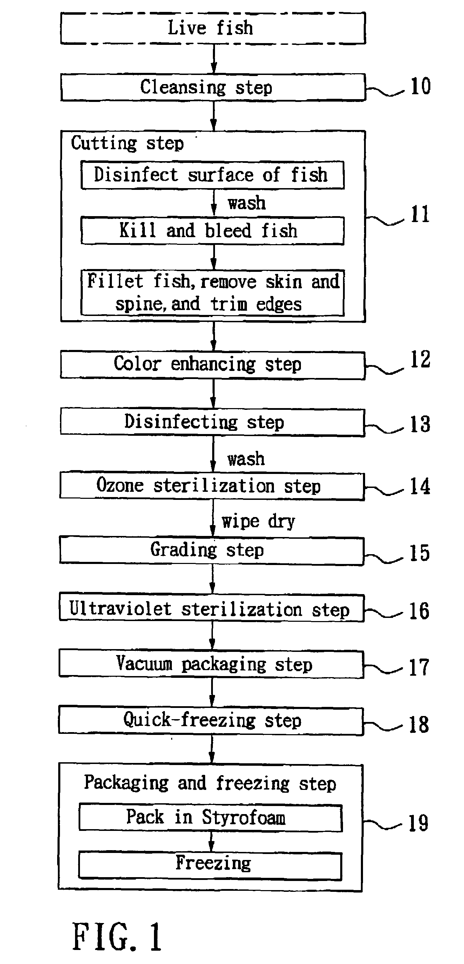

Referring to Figure 1, a conventional method of preserving fresh color of fish is shown to include a cleansing step 10, a cutting step 11, a color enhancing step 12, a disinfecting step 13, an ozone sterilization step 14, a grading step 15, an ultraviolet sterilization step 16, a vacuum packaging step 17, a quick-freezing step 18, and a packaging and freezing step 19.

In the cleansing step 10, a live fish to be processed is moved to a fish tank containing clean water, and is kept there for at least 12 hours to allow the fish to discharge most of the excremental wastes in its body into the fish tank.

In the cutting step 11, the cleansed live fish is immersed in a solution containing sodium hypochlorite or chlorite for about 10 minutes so as to disinfect the surface of the fish. The fish is then washed in clean water to remove the sodium hypochlorite or chlorite therefrom. Then, the fish is killed instantly by cutting the throat of the fish using a knife, or by subjecting the fish to carbon monoxide. Thereafter, the fish is bled and filleted, the fish skin and the spine are removed, and edges of the meat pieces are trimmed to obtain a neat appearance.

In the color enhancing step 12, the meat pieces are placed in a gas-tight bag, and carbon monoxide gas is introduced into the bag for a period of time. For a meat piece of 200 g, the meat piece is placed in an environment of carbon monoxide for 40-60 minutes to allow the meat pigment myoglobin in the fish meat to react with the carbon monoxide so as to produce a bright pink or red color in the fish meat.

In the disinfecting step 13, the color enhanced meat pieces are immersed in a solution containing sodium hypochlorite or chlorite for about 1 minute. Then, the meat pieces are washed in clean water to remove residual sodium hypochlorite or chlorite so as to achieve surface disinfection. Since the color enhancing step 12 takes a relatively long time to conduct, bacteria may breed on the surface of the meat pieces. Therefore, the disinfecting step 13 is mainly intended to destroy the bacteria that breed during the color enhancing step 12.

In the ozone sterilizing step 14, the meat pieces are immersed in a sterilizing tank containing ozone (O₃) for some time for sterilization. Thereafter, the meat pieces are removed and wiped dry.

In the grading step 15, the meat pieces are graded by weight so as to facilitate determination of the time required for subsequent freezing and packaging processing.

In the ultraviolet sterilizing step 16, the meat pieces are subjected to ultraviolet irradiation for sterilization purposes. This step is performed to kill bacteria that may breed on the meat pieces during the grading step 15 so as to prolong the shelf life of the meat pieces.

In the vacuum packaging step 17, the meat pieces thus sterilized are packed into packaging bags, and air within the packaging bags is evacuated to form a vacuum therein.

In the quick-freezing step 18, the packaging bags with the meat pieces are placed in a freezer at a temperature lower than -30°C to quick-freeze the meat pieces.

In the packaging and freezing step 19, the frozen meat pieces are packed in Styrofoam® containers and stored in a freezer.

For a meat piece of 200g, the time required for performing step 11 through step 13 is about 60-80 minutes, the time required for performing step 14 through step 17 is about 30-40 minutes, and the time required for performing steps 18 and 19 is about 90-100 minutes, adding up to a total of at least 3 hours.

It is apparent from the foregoing that the conventional method of preserving fresh color of fish has several disadvantages:
1. Prolonged processing time affects freshness of fish meat: To allow the myoglobin in fish meat to sufficiently react with carbon monoxide, the color enhancing step 12 generally takes at least 40 minutes to complete. For bigger or thicker meat pieces, the time will be longer. Therefore, the disinfecting step 13 is necessary to kill the bacteria generated during the color enhancing step 12. In so doing, the texture of the fish meat is also affected adversely, thereby reducing freshness of the fish meat and increasing the likelihood of food poisoning.
2. Potential health hazard: As the meat pieces show a bright pink or red color after being subjected to the carbon monoxide color enhancing treatment, the natural color of the fish meat is masked. Thus, consumers are unable to judge the freshness of the meat pieces by their appearance or color, and may unknowingly consume spoiled or toxic fish meat that threatens health.
3. Fish protein is likely to degrade, and bleeding is incomplete: As the live fish is instantly killed in the cutting step 11, the protein in the fish starts to degrade at the instant the fish is dead. Degraded protein generates toxic histamine that may endanger consumer's health when ingested. In addition, as the fish is instantly put to death and its nervous system virtually stops functioning, bleeding of the fish cannot be thoroughly done.
4. Packaged meat pieces tend to be compressed to result in impaired appearance: As the meat pieces are packaged in vacuum bags in the vacuum packaging step 17, the meat pieces may be compressed by the packaging bag so that residual blood in the capillaries on the surface of the meat pieces is forced out, which gradually becomes dark in color and mars the appearance of the packaged meat pieces.

Therefore, the object of the present invention is to provide a method of producing fish meat having fresh color so as to retard degradation of fish protein, shorten processing time, and retain the fresh color of fish meat for a relatively long period of time.

Accordingly, a method of producing fish meat having fresh color of this invention comprises:
placing live fish in a state of unconsciousness by blocking the conduction of nerve pulses along a nervous system of the fish;
bleeding the fish and cutting meat pieces from the fish while the fish is unconscious;
sterilizing the meat pieces;
placing the sterilized meat pieces in an oxygen-free environment to preserve the original color of the meat pieces;
freezing the meat pieces; and
packaging the frozen meat pieces,
wherein the live fish is placed in the state of unconsciousness using a pointed rod to sever nerves in the spine of the fish such that the fish is unable to struggle.

Other features and advantages of the present invention will become apparent in the following detailed description of the preferred embodiment with reference to the accompanying drawings, of which:
Figure 1 is a flowchart to illustrate a conventional method of preserving fresh color of fish; and
Figure 2 is a flowchart to illustrate the preferred embodiment of a method of producing fish meat having fresh color according to the present invention.

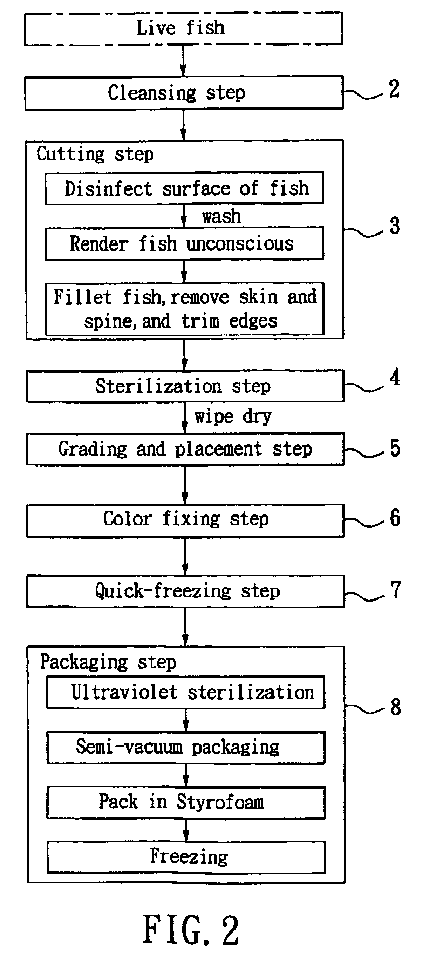

Referring to Figure 2, the preferred embodiment of a method of producing fish meat having fresh color according to the present invention is shown to include a cleansing step 2, a cutting step 3, a sterilizing step 4, a grading and placement step 5, a color fixing step 6, a quick-freezing step 7, and a packaging step 8.

In the cleansing step 2, a live fish to be processed is moved to a fish tank containing clean water, and is kept there for at least 12 hours to allow the fish to discharge most of the excremental wastes in its body into the fish tank.

In the cutting step 3, the cleansed live fish is first subjected to a surface disinfecting treatment by immersing the live fish in a solution containing sodium hypochlorite or chlorite so as to disinfect the surface of the fish. Sodium hypochlorite is commonly referred to as a bleaching agent, which can destroy protein of microorganisms to thereby kill bacteria, fungi and viruses. Chloriteisa highly effective oxidizing agent, which can adhere to and penetrate cell walls of microorganisms to oxidize mercapto-containing enzymes therein to thereby destroy the same. The live fish is removed from the solution after about 10 minutes, and is washed in clean water to remove residual sodium hypochlorite and chlorite therefrom.

Thereafter, a pointed rod is used to sever or destroy nerves in the spine or spinal column of the fish so as to block the conduction of nerve pulses along the nervous system of the fish, thereby placing the live fish in a state of unconsciousness such that the fish is unable to struggle. At this point, the fish can be subjected to bleeding and cutting or filleting. Since the fish is merely unconscious and is still alive, the fish muscles will still twitch, and the fish can be bled substantially thoroughly so that the fish meat is comparatively whiter or clearer in appearance. Alternatively, the live fish can be rendered unconscious by putting the fish temporarily in an environment such that the fish suffers from oxygen deficiency and the conduction of nerves pulses is blocked. In an example, a lot of fish is put into a bucket of cold water with a temperature of about 5°C . Due to coldness of the water, the respiratory system of the fish gradually fails so that the fish suffers from deficiency of oxygen and becomes unconscious. When the fish no longer wriggles, the fish can be subjected to bleeding and filleting. During filleting, the fish is skinned, the spine is removed, and meat pieces are cut from the fish. Thereafter, edges of the meat pieces are trimmed to obtain a neat appearance.

In the sterilizing step 4, the meat pieces are immersed in a low-temperature ozone sterilizing tank at a temperature within a range from 0°C to 5°C for sterilization for 30 seconds. Thereafter, the meat pieces are removed and wiped dry.

In the grading and placement step 5, the meat pieces are graded according to the weight thereof. The purpose of grading the meat pieces is to determine the time needed for freezing the meat pieces and the packaging operation. The heavier the meat pieces, the longer the time required to freeze the meat pieces. Thereafter, a plurality of meat pieces of the same grade are arranged on a tray, and the tray with the meat pieces is placed in a sealable gas-tight bag. The meat pieces should be arranged in such a manner that they do not overlap so that the meat pieces will not stick together upon freezing.

In the color fixing step 6, the meat pieces are placed in an oxygen-free environment so as to be isolated from ambient air. In the preferred embodiment, the oxygen-free environment is an environment filled with nitrogen, or an inert gas. In actual practice, before sealing, the gas-tight bag is filled with nitrogen, which forces out the air in the gas-tight bag, thereby isolating the meat pieces in the gas-tight bag completely from the ambient air.

In the quick-freezing step 7, the packagedmeat pieces are placed in a freezer at a temperature below -30°C so as to quick-freeze the meat pieces to thereby ensure freshness. Preferably, the meat pieces are frozen to a temperature below -35°C .

It is noted that the color fixing step 6 and the quick-freezing step 7 can be implemented in an assembly line having a conveyor belt. That is, trays with properly arranged meat pieces are placed on a conveyor belt to be transported to a cavity filled with nitrogen so as to expel the air in the gas-tight bags, and are further transported to the freezer for quick freezing. Thus, automated processing can be achieved to save manpower resources and operational time.

In the packaging step 8, the frozen meat pieces are subjected to ultraviolet sterilization for 80-100 seconds. Thereafter, the frozen meat pieces are packed into a packaging bag, and air in the packaging bag is evacuated such that the volume of the packaging bag is reduced to 5% to 15% of an original volume of the packaging bag, thereby achieving a semi-vacuum state. Preferably, the volume of the packaging bag is reduced to about 10% of the original volume of the packaging bag. Thereafter, the packaging bag containing the meat pieces is placed in a Styrofoam® box for subsequent freezing. The purpose of leaving a small amount of air in the packaging bag is to prevent the packaging bag from adhering to and compressing the meat pieces. With the presence of a small amount of air in the packaging bag, the surface of the meat pieces can be kept intact. Certainly, nitrogen or an inert gas can be introduced into the packaging bag in place of air so as to provide a substantially oxygen-free environment.

With the present invention, for a fish meat piece of 200 g, the time needed to perform steps 3, 4 and 5 is about 20-30 minutes . Filling the gas-tight bag with nitrogen in the color fixing step 6 takes only about several seconds, and steps 7 and 8 require about 90-100 minutes to perform. Therefore, processing of a meat piece of 200 g can be completed in about 2 hours.

It is apparent from the foregoing that the present invention provides several advantages over the prior art in actual practice.
1. The processing time can be reduced considerably to ensure the freshness of fish meat: Since the nitrogen treatment can be completed in just several seconds, the fish meat can be isolated from ambient air so that the natural white or pink color of the fish meat can be maintained, which is very different from the prior art whichutilizes carbonmonoxide as a color enhancing agent and which requires a period of reaction time of about 40-60 minutes to allow the carbon monoxide to exert its full effect. Besides, in the prior art, the time required for carbon monoxide to react will increase with an increase in the weight of the fishmeat. Furthermore, as the color fixing step 6 in the present invention is extremely short, the fish meat can be directly subj ected to quick-freezing without going through a disinfecting step, which is required in the prior art. In other words, the disinfecting step 13 (see Figure 1) of the aforesaid prior art can be eliminated, thereby shortening the processing time and ensuring freshness of the fish meat.
2. Spoilage of the fish meat can be easily identified to ensure food safety: Unlike the prior art which uses carbon monoxide to create a bright red color in the fish and to mask the natural color of the fish meat, in the present invention, since nitrogen is used to isolate the fish meat from ambient air in the color fixing step 6, the natural white or pink color of the fish meat can be maintained for a relatively long period of time. Thus, consumers can readily identify the freshness of the fish meat by looking, and can avoid eating spoiled fish meat, or fish meat that starts to develop toxics.
3. The natural white or pink color of the fish meat can be retained for a relatively long period of time while delaying degradation of fish protein: Since the live fish is bled and filleted after being rendered unconscious in step 2 , bleeding canbe done substantially thoroughly to help retain the original white or pink color of the fish meat. Besides, since death of the fish is delayed, degradation of the fish protein can be retarded as well.
4. The appearance of the fish meat will not be adversely affected by packaging: Since a small amount of air is retained in the packaging bag in step 8, the packaging bag will not adhere to the fishmeat to compress the capillaries on the surface of the fish meat, thereby preserving the surface of the fish meat intact.

## Claims

1. A method of producing fish meat having fresh color, **characterized by**:
placing live fish in a state of unconsciousness by blocking the conduction of nerve pulses along a nervous system of the fish;
bleeding the fish and cutting meat pieces from the fish while the fish is unconscious;
sterilizing the meat pieces;
placing the sterilized meat pieces in an oxygen-free environment to preserve the original color of the meat pieces; freezing the meat pieces; and
packaging the frozen meat pieces,
wherein the live fish is placed in the state of unconsciousness using a pointed rod to sever nerves in the spine of the fish such that the fish is unable to struggle.

2. The method according to Claim 1, **characterized in that** the oxygen-free environment is an environment filled with an inert gas.

3. The method according to Claim 2, further **characterized in that** the inert gas is nitrogen.

4. The method according to Claim 1, further **characterized by** a cleansing step before placing the live fish in the state of unconsciousness, wherein the live fish is kept in a tank of clean water for at least twelve hours so as to allow the fish to discharge most of the excrements therein.

5. The method according to Claim 1, **characterized in that**, before placing the live fish in the state of unconsciousness, the live fish is subjected to a surface disinfecting treatment.

6. The method according to Claim 5, further **characterized in that** the live fish is subjected to the surface disinfecting treatment by immersing the fish in a solution containing sodium hypochlorite or chlorite.

7. The method according to Claim 6, further **characterized in that**, after cutting the meat pieces from the fish, the skin and the spine are removed, and edges of the meat pieces are trimmed.

8. The method according to Claim 1, **characterized in that**, in the sterilizing step, the meat pieces are disposed in a low-temperature ozone sterilization tank at a temperature of 0°C to 5°C.

9. The method according to Claim 1, **characterized in that** the original color of the meat pieces is preserved by placing the meat pieces in a gas-tight bag and filling the bag with nitrogen.

10. The method according to Claim 11, further **characterized by** a step of grading the meat pieces according to weight of the meat pieces, arranging the meat pieces on a tray, and placing the tray with the meat pieces in the gas-tight bag.

11. The method according to Claim 1, **characterized in that**, in the freezing step, the meat pieces are frozen to a temperature below -30°C.

12. The method according to claim 1, **characterized in that**, in the packaging step, the meat pieces are subjected to ultraviolet sterilization before being packed into a packaging bag, and the packaging bag is vacuumed such that the volume of the packaging bag is reduced to 5%-15% of an original volume of the packaging bag.

13. The method according to Claim 12, further **characterized in that** the volume of the packaging bag is reduced to 10% of the original volume of the packaging bag.

14. The method according to Claim 13, further **characterized in that** the packaging bag together with the meat pieces therein is put into a Styrofoam box for subsequent freezing.

## Patentansprüche

1. Verfahren zur Herstellung von Fischfleisch mit einer frischen Farbe, **gekennzeichnet durch** die Schritte:
Versetzen des lebenden Fisches in einen Zustand der Bewusstlosigkeit **durch** Blockieren der Leitung von Nervenimpulsen entlang eines Nervensystems des Fisches;
Ausbluten des Fisches und Abschneiden von Fleischstücken vom Fisch, während der Fisch bewusstlos ist;
Sterilisieren der Fleischstücke;
Einbringen der sterilisierten Fleischstücke in eine Sauerstoff-freie Umgebung, um die ursprüngliche Farbe der Fleischstücke zu bewahren;
Einfrieren der Fleischstücke; und
Verpacken der eingefrorenen Fleischstücke,
wobei der lebende Fisch in den Zustand der Bewusstlosigkeit versetzt wird unter Einsatz eines spitzen Stabes, um die Nerven im Rückgrat des Fisches zu durchtrennen, so dass der Fisch sich nicht bewegen kann.

2. Verfahren nach Anspruch 1, **dadurch gekennzeichnet, dass** die Sauerstoff-freie Umgebung eine mit einem Inertgas gefüllte Umgebung ist.

3. Verfahren nach Anspruch 2, zusätzlich **dadurch gekennzeichnet, dass** das Inertgas Stickstoff ist.

4. Verfahren nach Anspruch 1, zusätzlich durch einen Reinigungsschritt vor dem Versetzen des lebenden Fisches in den Zustand der Bewusstlosigkeit, wobei der lebende Fisch in einem Behälter mit sauberem Wasser für mindestens 12 Stunden gehalten wird, um es dem Fisch zu ermöglichen, den größten Teil seiner Exkremente darin abzulassen.

5. Verfahren nach Anspruch 1, **dadurch gekennzeichnet, dass** der lebende Fisch, bevor er in den Zustand der Bewusstlosigkeit versetzt wird, einer Oberflächen-Desinfektionsbehandlung unterzogen wird.

6. Verfahren nach Anspruch 5, zusätzlich **dadurch gekennzeichnet, dass** der lebende Fisch der Oberflächen-Desinfektionsbehandlung durch Eintauchen des Fisches in eine Natriumhypochlorit oder -chlorit enthaltende Lösung unterzogen wird.

7. Verfahren nach Anspruch 6, zusätzlich **dadurch gekennzeichnet, dass** nach dem Abschneiden der Fleischstücke von dem Fisch, die Haut und das Rückgrat entfernt werden und die Kanten der Fleischstücke nachgeschnitten werden.

8. Verfahren nach Anspruch 1, **dadurch gekennzeichnet, dass** die Fleischstücke beim Sterilisierungsschritt bei einer Temperatur von 0 °C bis 5 °C in einen Tieftemperatur-Ozon-Sterilisierungsbehälter gegeben werden.

9. Verfahren nach Anspruch 1, **dadurch gekennzeichnet, dass** die ursprüngliche Farbe der Fleischstücke durch Einbringen der Fleischstücke in einen gasdichten Beutel und Füllen des Beutels mit Stickstoff bewahrt wird.

10. Verfahren nach Anspruch 1, zusätzlich **gekennzeichnet durch** einen Schritt der Klassierung nach dem Gewicht der Fleischstücke, des Einordnens der Fleischstücke in einem Korb und des Einbringen des Korbes mit den Fleischstücken in den gasdichten Beutel.

11. Verfahren nach Anspruch 1, **dadurch gekennzeichnet, dass** die Fleischstücke beim Schritt des Einfrierens auf eine Temperatur unter -30 °C tiefgekühlt werden.

12. Verfahren nach Anspruch 1, **dadurch gekennzeichnet, dass** beim Verpackungsschritt, die Fleischstücke einer Ultraviolett-Sterilisierung unterzogen werden, bevor sie in die Verpackungsbeutel verpackt werden, und der Verpackungsbeutel abgesaugt wird, so dass das Volumen des Verpackungsbeutels um 5% - 15% eines ursprünglichen Volumens eines Verpackungsbeutels reduziert wird.

13. Verfahren nach Anspruch 12, zusätzlich **dadurch gekennzeichnet, dass** das Volumen des Verpackungsbeutels um 10% des ursprünglichen Volumens eines Verpackungsbeutels reduziert wird.

14. Verfahren nach Anspruch 13, zusätzlich **dadurch gekennzeichnet, dass** der Verpackungsbeutel zusammen mit den Fleischstücken darin zum anschließenden Einfrieren in eine Styropor-Box gegeben wird.

## Revendications

1. Procédé pour produire de la viande de poisson ayant une couleur fraîche, **caractérisé par** les étapes consistant à :
➢ placer le poisson vivant dans un état d'inconscience en bloquant la conduction des impulsions nerveuses le long du système nerveux du poisson ;
➢ vider le poisson et couper des morceaux de viande dans le poisson alors que le poisson est inconscient ;
➢ stériliser les morceaux de viande ;
➢ placer les morceaux de viande stérilisés dans un environnement dépourvu d'oxygène afin de conserver la couleur d'origine des morceaux de viande ; congeler les morceaux de viande ; et
➢ emballer les morceaux de viande congelés,
dans lequel le poisson vivant est placé dans l'état d'inconscience en utilisant une tige pointue pour sectionner les nerfs dans la colonne vertébrale du poisson de sorte que le poisson est incapable de lutter.

2. Procédé selon la revendication 1, **caractérisé en ce que** l'environnement dépourvu d'oxygène est un environnement rempli avec un gaz inerte.

3. Procédé selon la revendication 2, **caractérisé en outre en ce que** le gaz inerte est de l'azote.

4. Procédé selon la revendication 1, **caractérisé en outre par** une étape de nettoyage avant de placer le poisson vivant dans l'état d'inconscience,
dans lequel le poisson vivant est maintenu dans un réservoir d'eau propre pendant au moins douze heures afin de permettre au poisson d'évacuer la majeure partie des excréments dans ce dernier.

5. Procédé selon la revendication 1, **caractérisé en ce que**, avant de placer le poisson vivant dans l'état d'inconscience, le poisson vivant est soumis à un traitement de désinfection de surface.

6. Procédé selon la revendication 5, **caractérisé en** outre ce que le poisson vivant est soumis au traitement de désinfection de surface en immergeant le poisson dans une solution contenant de l'hypochlorite de sodium ou du chlorite de sodium.

7. Procédé selon la revendication 6, **caractérisé en ce que**, après avoir découpé des morceaux de viande dans le poisson, la peau et la colonne vertébrale sont retirées, et les bords des morceaux de viande sont coupés.

8. Procédé selon la revendication 1, **caractérisé en ce que**, à l'étape de stérilisation, les morceaux de viande sont disposés dans un réservoir de stérilisation à base d'ozone à basse température, à une température de 0°C à 5°C.

9. Procédé selon la revendication 1, **caractérisé en ce que** l'on conserve la couleur d'origine des morceaux de viande en plaçant les morceaux de viande dans un sachet étanche au gaz et en remplissant le sachet avec de l'azote.

10. Procédé selon la revendication 11, **caractérisé en outre par** une étape consistant à calibrer les morceaux de viande selon le poids des morceaux de viande, agencer les morceaux de viande sur un plateau et placer le plateau avec les morceaux de viande dans un sachet étanche au gaz.

11. Procédé selon la revendication 1, **caractérisé en ce que**, à l'étape de congélation, les morceaux de viande sont congelés à une température inférieure à -30°C.

12. Procédé selon la revendication 1, **caractérisé en ce que**, à l'étape d'emballage, les morceaux de viande sont soumis à la stérilisation par ultraviolet avant d'être emballés dans un sachet d'emballage, et le sachet d'emballage est mis sous vide de sorte que le volume du sachet d'emballage est réduit de 5% à 15% par rapport à un volume d'origine du sachet d'emballage.

13. Procédé selon la revendication 12, **caractérisé en outre en ce que** le volume du sachet d'emballage est réduit de 10% par rapport au volume d'origine du sachet d'emballage.

14. Procédé selon la revendication 13, **caractérisé en outre en ce que** le sachet d'emballage conjointement aux morceaux de viande à l'intérieur de celui-ci est placé dans une boîte en mousse de polystyrène pour une congélation ultérieure.
